· Europäisches Patentamt

European Patent Office

Office européen des brevets

(11) Publication number: **0 320 544**
**A1**

## EUROPEAN PATENT APPLICATION

(21) Application number: 87311058.9

(22) Date of filing: 15.12.87

(51) Int. Cl.⁴: **H04N 7/06 , H04N 7/04**

The title of the invention has been amended (Guidelines for Examination in the EPO, A-III, 7.3).

(43) Date of publication of application:
**21.06.89 Bulletin 89/25**

(84) Designated Contracting States:
**AT CH DE ES FR GR IT LI LU**

(71) Applicant: **Ferguson Limited**
**Cambridge House Great Cambridge Road**
**Enfield Middlesex, EN1 1UL(GB)**

(72) Inventor: **Holmes, Stuart Jackson**
**"Tanelorn" Bank End Micklethwaite**
**Bingley West Yorkshire(GB)**
Inventor: **Thompson, Geoffrey**
**20, Chellow Grange Road**
**Bradford West Yorkshire BD9 6NL(GB)**

(74) Representative: **Fleming, Ian Alexander et al**
**THORN EMI Patents Limited The Quadrangle**
**Westmount Centre Uxbridge Road**
**Hayes Middlesex, UB4 0HB(GB)**

(54) Television transmission system with stereo sound.

(57) A transmission system 1 for PAL System-I television signals accompanied by an additional stereo signal for enhanced audio reception includes a transmission station 2 and a number of television receivers (e.g. as shown by 3), each with a decoder unit specifically to process the stereo signal.

Transmission station 2 has a studio 4 with an interleaver unit 5 which interleaves the audio data (but not its indication or control sections) within each frame, and then passes the resultant signals to a transmitter 6, the stereo channel having a carrier frequency 6.552 MHz above that of the transmitted vision.

FIG.1

## STEREO TRANSMISSION

The present invention relates to a system for the transmission of audio signals to accompany video signals.

A proposed transmission system for stereo signals to accompany conventional television transmissions provides a serial data stream partitioned into 728-bit frames, each transmitted in a millisecond. Each frame has: a first section of eight bits comprising a Frame Alignment Word (FAW) which marks the start of the frame; a second section of four bits which provide control information, being one flag bit (namely $C_0$, which alternates between 0 and 1 every 8 milliseconds to determine odd and even frames over a 16 frame sequence) and three mode bits (namely $C_1$, $C_2$, and $C_3$, which indicate the nature of the transmitted signal, e.g. mono, stereo, dual-language, data); a third section of twelve bits of additional data, independent of the control information bits; and finally a fourth section of sixty-four 11-bit words corresponding to the audio (or data if appropriate) being transmitted, this last section having a total of 704 bits.

In each frame as transmitted, interleaving is applied to the block of 720 bits which follow the FAW in order to ensure that adjacent bits are not transmitted seqentially so as to minimise the effect of multiple-bit errors. The interleaving pattern places data bits, which are adjacent in the frame structure as output by the television receiver, in positions at least 16 clock periods apart in the transmitted bit stream (i.e. at least 15 other bits occur between bits which are adjacent in the output frame structure).

In the production of the sound signals, they are sampled at 32 kHz and coded initially with a resolution of 14 bits per sample. For transmission, the number of bits per sample is reduced to 10, using near-instantaneous companding, and one parity bit is added to the end of each 10-bit sample word for error detection and scale-factor signalling purposes, thereby resulting in the 11-bit words in the fourth section of the frame.

In the operation at a television receiver to derive the appropriate range value (corresponding to the scale-factor) of a transmitted signal, the provision of the interleaving structure means that a parity bit may be received before some of the bits of the relevant word; accordingly, a frame is de-interleaved and stored before the range-determining operation is started.

The present invention provides a television receiver for a transmission system to provide audio/data signals to accompany transmitted video signals, the television receiver comprising: means to input a transmitted audio/data signal comprising a stream of digital elements formed into a plurality of frames, each frame comprising three sections, namely a section to indicate the start of a frame, a section to contain control information and a section to contain the audio/data information; means to de-interleave the audio/data information section of a frame, the de-interleave means comprising means to change the sequence of digital elements as transmitted according to a predetermined relationship such as to produce a sequence for output by the television receiver; means to determine a companding-range value for a frame of audio data signal, the companding-range determining means processing the frame as it is input thereto; and means to display the resultant audio/data signal in association with a video signal.

In this way, derivation of the range value can be achieved without having to load the entire signal for a frame into storage and then to process it. Accordingly, the provision of this technique ensures the amount of storage necessary is minimised.

Preferably the television receiver has de-interleaving means to de-inter leave the aduio/data information section, but not the indication and control sections, of a frame. Advantageously, the television receiver has de-interleaving means to de-interleave only the audio/data information section of a frame.

In order that the invention may more readily be understood, a description is now given, by way of example only, reference being made to the accompanying drawings in which:-

Figure 1 is a block diagram of a transmission system embodying the present invention;

Figure 2 is a schematic representation of the structure of a stereo signal for use in the system of Figure 1;

Figure 3 is a schematic diagram of part of a television receiver of the system of Figure 1;

Figure 4 is a circuit diagram of part of a television receiver of the system of Figure 1;

Figure 5 is a schematic diagram of a further part of a television receiver of the system of Figure 1; and

Figure 6 is a representation of waveforms in connection with the feature of Figure 5.

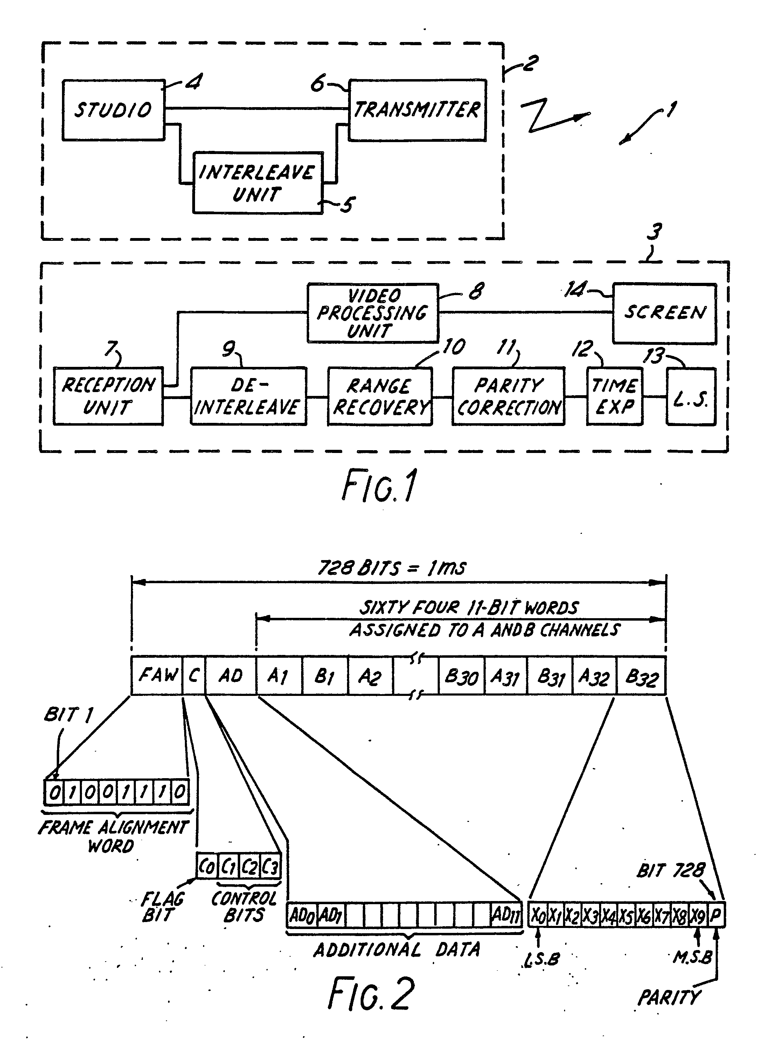

In Figure 1, there is shown a transmission system 1 for the transmission of PAL System-I television signals accompanied by an additional stereo signal for enhanced audio reception. The system includes a transmission station 2 and a number of television receivers of which only one, referenced 3, is shown.

Receiver 3 may be a conventional PAL television receiver connected with a decoder unit specifically designed to process the stereo signal and reproduce the stereo sound at, or for, the receiver; alternatively, the receiver may be specifically designed to process the stereo signal as well as, or instead of, processing the audio signal incorporated in the PAL System-I signal.

Transmission station 2 has a studio 4 which provides a recording consisting of a channel of video signals (incorporating the normal audio component) in accordance with the System-I PAL standard, and a channel of stereo signals of a format as shown in Figure 2. Signals of this stereo channel are passed to an interleaver unit 5 which interleaves the audio data within each frame, and then passes the resultant signals to a transmitter 6 which broadcasts the PAL video channel and the stereo channel, the latter having a carrier frequency 6.552 MHz above the frequency of the transmitted vision carrier.

The combined signal passes to a reception unit 7 at television receiver 3, and is separated out again into the PAL video channel (the subsequent processing of which at video processing unit 8 is conventional and therefore a description is not pertinent) and the stereo channel which is input to a de-interleaver unit 9 for re-arrangement of the bits, in the audio data section of each frame to their original sequence before input to interleaver unit 5. A range recovery unit 10 inspects each word and its corresponding parity bit in order to determine whether there is compatability, from which information it derives a three-bit range value for that frame. Thereafter a parity correction unit 11 effects any necessary alterations to the words in view of the results of the compatability inspection, a time expansion unit 12 increases the duration of the audio words to account for the other sections in a frame and the resultant signal passes to a loudspeaker unit 13 for output synchronized with display of the signal on the video channel at cathode ray tube screen 14.

Figure 2 shows the structure of one frame of the signal in the stereo channel of transmission system 1 before interleaving. The sixty-four words in the audio information section are arranged such as to alternate between the two output signals of the stereo channel, i.e. the first, third and subsequent odd words are associated with output signal A (e.g. the lefthand side signal) of the stereo channel, while the second, fourth and subsequent even words are associated with output signal B (e.g. the righthand side signal) of the stereo channel. Thus 32 words for each output signal of the stereo channel are transmitted in every frame.

The system 1 is capable of transmitting signals other than stereo signals on this channel; thus for example this channel may carry mono audio signals (these being of higher quality than those incorporated with the conventional PAL video signal) in one language or more, or data signals representing information other than sound and optionally related to the television display.

After interleaving at unit 5, the structure of the 728 bits in a frame is as shown in the Table 1 given below, in which the numbers relate to the original position before interleaving. In this Table, the bits in the audio information section have been laid out in a lattice form to show clearly the interleaving structure; of course, in the signal itself, this section has a continuous sequence of bits formed by reading left to right along a row, the rows being taken from the top downwards.

TABLE 1

| FAW | CONTROL INFORMATION | ADDITIONAL DATA | AUDIO INFORMATION |
|---|---|---|---|
| 1 to 8 | 9 to 12 | 13 to 24 | 25,69,113,157....685<br>26,70,114....686<br>27,71,115....687<br>28,72,116....688<br>29,....689<br>30,....690<br>....<br>....<br>68,112,156....728 |

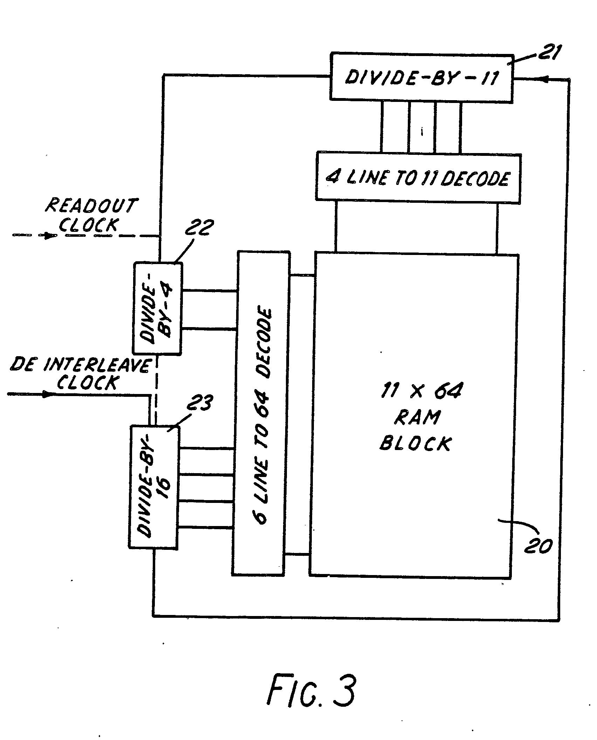

The de-interleave unit 9 has a switch unit to direct incoming frames alternately to two RAM stores, each of which corresponds to the arrangement shown in Figure 3 whereby a 11 by 64 RAM block 20 has a divide-by-11 counter 21, a divide-by-four counter 22 and a divide-by-16 counter 23.

Since the RAM block 20 has 64 rows by 11 columns, a divide-by-64 counter and a divide-by-11 counter are required for addressing. In the write mode the divide-by-64 counter is formed of counter 23 and counter 22. With all the counters initially containing 0, the print clock pulse changes the number in counter 23 to 1 and the decoder selects row 4 while the decoder output of counter 21 selects column 0. The second clock pulse changes the number in counter 23 to 2, which is decoded as row 8, the third clock pulse changes the number to 3 which is decoded as row 12, and so on. In this way rows 0,4,8,16 and so on to 60 are addressed in turn while column 0 continues to be addressed. After row 60 column 0 has been addressed, the next clock pulse resets counter 23 to 0 and the overflow pulse clocks counter 21 to 1. Rows 0,4,8 16 and so on to 60 are now again addressed in turn but with column 1 addressed. This continues until row 60 column 10 has been written. The next clock pulse produces an overflow from counter 21 which clocks 1 into counter 22. The number is added to the row count of counter 23, so the I0 addressed rows are row 1,5,9, 17 and so on to 6I. When row 61 column 10 has been written, the overflow from counter 21 changes the number in 22 to 2, and so on. In this way the data bits are stored in the RAM in de-interleaved order and can be read out by simply addressing each of the rows in turn using the divide-by-64 counter formed by the divide-by-16 counter 23 and the divide-by-4 counter 22. Since the 11 bits of a word are read out in parallel, the divide-by-11 counter 21 is not needed for read-out and the same counter can therefore be used to address the second RAM which writes while the first is being read.

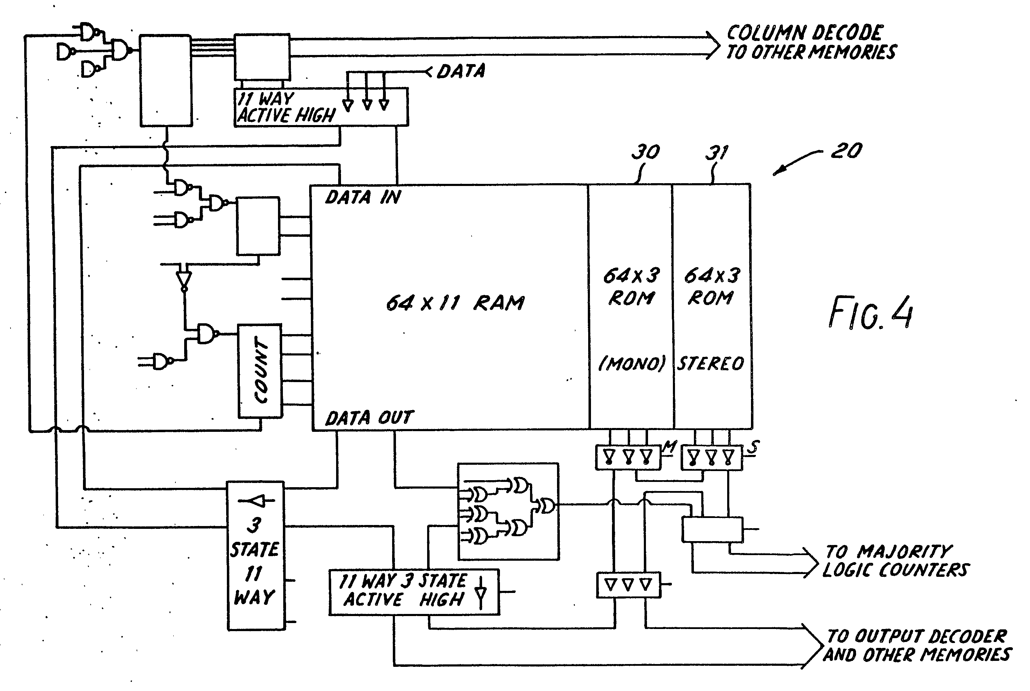

There is shown in Figure 4 a circuit diagram of the memory organization and address logic of a store 20 and its associated electronic circuits and components in greater detail than shown by Figure 3. Store 20 includes two 64 x 3 ROM'S 30, 31, one being used for range recovery in mono signals, and one being used for range recovery in stereo signals.

In a modification, only one divide-by-11 counter is used, being multiplexed between all the memories. Also a ROM, associated with the RAM area, is used for range word testing.

The use of ROM reduces the amount of chip area which would otherwise have to be employed in the range word test logic.

Also the ROM information is held in binary form so that only three rather than six select lines need to be routed around the IC to the majority logic counters. This again is a saving in chip area. Additionally, a ROM/RAM structure may be of a design so that every word of RAM also accesses a six bit word of ROM. By customising a ROM/RAM system only one row decoder needs to be included. By multiplexing the range test circuitry only one set of majority logic counters need be included in the integrated circuit.

Using the interleaved structure shown in Table 1, the information and parity bits of each word are transmitted in the correct order, i.e. the least-significant-bit first and the parity bit last. Thus, as soon as the parity bit has been received the value of its range but can be determined and sent to the majority logic. With the stores organised in a 64 row by 11 column format, all the received parity bits can be stored in the same column and the action of writing in that column indicates that the parity check can be made on the word in that row. The range bits are therefore determined in real-time rather than after the complete frame has been stored; so read-out can begin immediately and the store will be free by the time the third frame begins to arrive, thereby ensuring that a third store is unnecessary for the processing of stereo signals. A third store is necessary for the processing of "simultaneous dual - language reception" signals, but again the described arrangement provides a reduction in storage necessary, in that conventional processing techniques for such signals require four stores.

There are many instances in the receiver 3 where majority logic must be performed, this being achieved by the use of a counter which can be incremented every time the input is say a "1" and decremented whenever the input is a "0". At the end of the input sequence a test for positive or negative count will give a majority decision of the input sequence.

Alternatively, the counter may be simply incremented when the input is say a "1" and no action taken when the input is in the alternative state. At the end of the input sequence the output of the count can be checked to see if it is greater than a particular value e.g. half the number of input pulses. If it is greater, then the output is one state; if it is less, the majority is the alternative state.

Sound muting which avoids unacceptable clicking of the loudspeaker may be achieved by shifting the output signal right or left with respect to the least significant bit by means of a parallel-to-serial output circuit programmed to shift left or right depending on whether a mute or demute was required.

Because of the structure of the conventional interleave system, it was not possible to do a test range bit operation until the whole of the frame had been transmitted since it was not known when a complete word of information had been written to the memory. However, with the new interleave structure, the rows in the memory fill up left to right hence whenever writing to the last column is necessary, it is implicit in the interleave that all the rest of the data for that word has been previously transmitted. Hence if a detection system is used to identify a last column write by simply looking at an output from the address decoder on the last column, then a read/write operation can be performed and a test range bit generated. When all the rows have been written i.e. at the end of the frame, the required number of test range bits will have been generated and hence the majority logic now contains the correct range word information. This means that as the RAM can now be used for an output operation one less RAM is needed than would otherwise be required producing a saving of chip area and so price.

An alternative way of range recovery is to utilise a high speed processing system in order to calculate the correct range words during the time interval occupied by the frame alignment word, control bits, and auxiliary data. If the range bits could be calculated correctly during this interval, one less RAM is required than would otherwise be needed, Should this calculation period extend over into the transmitted frame alignment control bits and additional data interval, however, then an extra RAM would be necessary.

There exists a problem inherent in the conventional system when non-changing audio information (e.g. silence) is being transmitted. In these circumstances, the sampling systems takes this stationary bit pattern (probably all "O") and multiplies it by a pseudo random sequence. This action creates false frame alignment code pulses. Frame alignment code pulses occur naturally anyway, since the probability of them occuring is 1 in 256, in one frame of information there are on average 2.8 frame alignment codes generated by chance. However, the frame alignment words are spaced at an interval of 728 clock cycles apart i.e. one frame. The detection system then waits for 728 clock cycles (1mS) before checking to see if the same bit pattern occurs. In this way the chance of getting successive FAW patterns is very low 1/256)$^n$ where n is the number of successive tries). However the action of the pseudo random sequence generator on static bit patterns not only creates a FAW but additionally creates it at exactly the right interval since an FAW is created at the same point in each frame after the true FAW. Under these circumstances, should a TV be turned on when there is a period of silence (or when in data transmission and where mono where the data is a constant bit stream), the stereo decoder chip could lock on to the false FAW rather than the true FAW in the signal. There is no way to distinguish that this was a false lock condition.

To overcome this problem, the system has an additional timing circuit included. If one considers the locking circuit to be in two parts, the first part is a FAW detection circuit and the second part a Co bit detector (effectively a digital phase lock loop). Then the normal action of lock would be: firstly the frame alignment code acquires lock and enables the Co detections circuit to lock on to the Co bit waveform; secondly, when the Co and FAW acquisition circuits indicate that both these signals are acquired, the receiver is allowed to proceed with decoding sound.

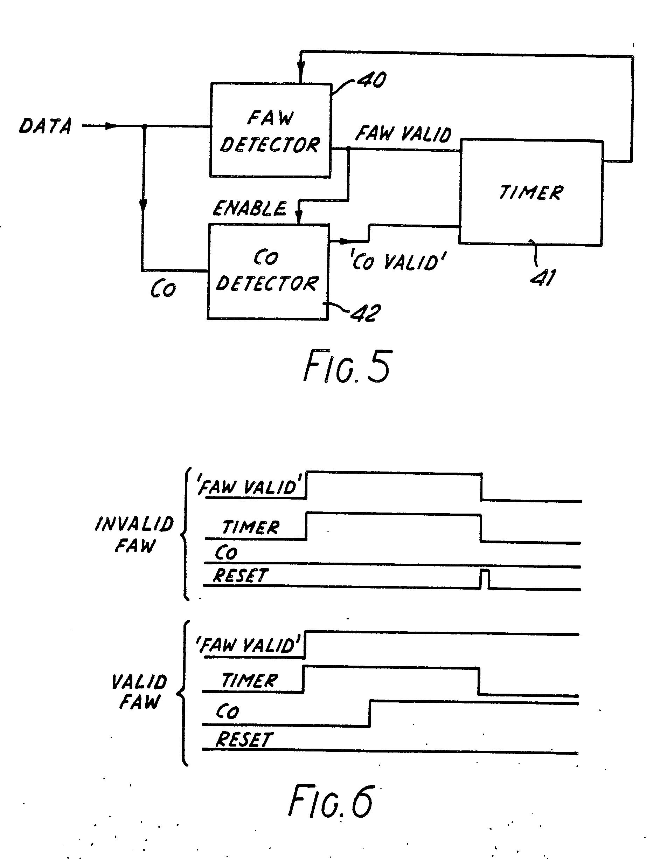

Under false lock conditions, the Co decoder would not lock on to a Co signal since this bit is now incorrectly positioned and the data going into the Co decoder is not the bit in the transmission sequence. Thus, information can be used to reset the FAW detection circuit. As shown in Figure 5, a FAW code circuit 40 generates an output indicating a valid frame alignment code pattern detection. This in turn starts a timing device 41 which times a period sufficient for the Co detector 42 to acquire lock under all useable signal conditions. At the end of this timing period, the Co detector is checked to see if a valid Co detection has taken place. If it has, no action is taken; but if it has not, the FAW detection circuitry is reset and a new frame alignment lock sequence initiated. Figure 6 shows appropriate waveforms.

The present invention is applicable not just to a television receiver, but to any appropriate part of a system for the transmission of said signals. Thus the present invention embodies equipment other than television receivers. Moreover the present invention also embodies an integrated circuit which incorporates features hereinabove defined for use in the system or a part thereof.

**Claims**

1. A television receiver for a transmission system to provide audio/data signals to accompany transmitted video signals, the television receiver comprising: means to input a transmitted audio/data signal comprising a stream of digital elements formed into a plurality of frames, each frame comprising three sections, namely a section to indicate the start of a frame, a section to contain control information and a section to contain the audio/data information; means to de-interleave the audio/data information section of a frame, the de-interleave means comprising means to change the sequence of digital elements as transmitted according to a predetermined relationship such as to produce a sequence for output by the television receiver; means to determine a companding-range value for a frame of audio/data signal, the companding-range determining means processing the frame as it is input thereto; and means to display the resultant audio/data signal in association with a video signal.

2. A television receiver according to Claim 1, comprising de-interleaving means to de-interleave the audio/data information section, but not the indication or control sections, of a frame.

3. A television receiver according to Claim 1 or 2, comprising de-interleave means to de-interleave only the audio/data information section of a frame.

5

FIG.1

FIG.2

FIG. 3

COLUMN DECODE
TO OTHER MEMORIES

DATA

11 WAY
ACTIVE HIGH

30    31    20

DATA IN

64 X 11 RAM

64x3
ROM

(MONO)

64x3
ROM

STEREO

FIG.4

COUNT

DATA OUT

M    S

3
STATE
11
WAY

11 WAY 3 STATE
ACTIVE HIGH

TO MAJORITY
LOGIC COUNTERS

TO OUTPUT DECODER
AND OTHER MEMORIES

EP 0 320 544 A1

FIG.5

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | NHK LABORATORIES NOTE, no. 282, November 1982, pages 1-13, NHK, Tokyo, JP; T. YOSHINO et al.: "PCM sounds on digital subcarrier in television for a satellite broadcasting system" * Whole article * | 1-3 | H 04 N 7/06 H 04 N 7/04 |
| X | IEEE TRANSACTIONS ON CONSUMER ELECTRONICS, vol. CE-31, no. 1, February 1985, pages 24-31, IEEE, New York, US; H. UKAI et al.: "Sound PCM decoder LSIs for Japanese DBS" * Page 24, left-hand column, line 21 - page 28, left-hand column, line 20 * | 1-3 | |
| X | IEEE TRANSACTIONS ON CONSUMER ELECTRONICS, vol. CE-30, no. 3, August 1984, pages 265-271, IEEE, New York, US; T. ARAI et al.: "Receiver for DBS with digital audio signals" * Whole article * | 1-3 | TECHNICAL FIELDS SEARCHED (Int. Cl.4) |
| X | RUNDFUNKTECHNISCHE MITTEILUNGEN, vol. 29, no. 1, January/February 1985, pages 23-35, Noderstedt, DE; C. DOSCH: C-MAC/PAKET: "Normvorschlag der Europäischen Rundfunkunion für den Satellitenrundfunk" * Page 26, paragraph 3.1.4; figures 9-12 * | 1-3 | H 04 N |

-/-

The present search report has been drawn up for all claims

| Place of search | Date of completion of the search | Examiner |
|---|---|---|
| THE HAGUE | 11-07-1988 | BOSCH F.M.D. |

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | IEEE TRANSACTIONS ON CONSUMER ELECTRONICS, vol. CE-30, no. 3, August 1984, pages 462-466, IEEE, New York, US; Y. KOJIMA et al.: "A new digital audio and data transmission system using the CATV network" <br> * Page 466, left-hand column, lines 8-24 * | 2,3 | |
| A | WIRELESS WORLDS, vol. 90, no. 1582, July 1984, pages 17-19, Oldhill, Dunstable, GB; E.H. HARTWELL: "Digital stereophony with television" <br> * Page 17, left-hand column, lines 1-17; page 19, left-hand column, lines 14-20; page 19, left-hand column, lines 53-64; page 19, middle column, line 26 - right-hand column, line 13 * | 1 | |
| E | EP-A-0 251 626 (THORN EMI HOME ELECTRONICS) <br> * Whole document * | 1-3 | TECHNICAL FIELDS SEARCHED (Int. Cl.4) |

The present search report has been drawn up for all claims

| Place of search | Date of completion of the search | Examiner |
|---|---|---|
| THE HAGUE | 11-07-1988 | BOSCH F.M.D. |

EPO FORM 1503 03.82 (P0401)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document